# EUROPEAN PATENT SPECIFICATION

(11) **EP 1 647 511 B1**
(45) Date of publication and mention of the grant of the patent: **26.09.2007**
(21) Application number: 04742089.8
(22) Date of filing: 16.07.2004
(51) Int. Cl.: B65H 49/08, C09K 3/10, D06M 15/693

(54) **NOVEL SYSTEM FOR THE GASKET SEALING OF SCREWED CONNECTIONS IN PIPES FOR THE CONVEYANCE OF FLUIDS**
NEUES SYSTEM ZUR ABDICHTUNG VON SCHRAUBVERBINDUNGEN IN ROHREN ZUR BEFÖRDERUNG VON FLUIDEN
NOUVEAU SYSTEME DE SCELLEMENT D'ASSEMBLAGES VISSES DANS DES CONDUITES AU MOYEN D'UN JOINT ELASTIQUE POUR LA CONDUCTION DE FLUIDES

(30) Priority: 18.07.2003 ES 200301705
(43) Date of publication of application: 19.04.2006
(73) Proprietor: Filflex, S.L., 46460 Silla, Valencia (ES)
(72) Inventor: NIETO MOCHOLI, José, E-46460 Silla, Valencia (ES)
(74) Representative: Elzaburu Marquez, Alberto
(86) International application number: PCT/ES2004/070051
(87) International publication number: WO 2005/007548

(56) References cited:
- ES-T3- 2 057 283
- ES-T3- 2 161 091
- ES-T3- 2 171 293
- GB-A- 415 501

## Description

### Technical Field of the Invention

This invention belongs to the technical field of the sealing of screw joints of fluid pipes, mainly in the field of plumbing.

### State of the Art

There are currently various elements or systems for achieving leak-tightness of threaded connections in pipes. Naturally, they all work more or less correctly but, given the diversity of materials used for the manufacture of pipes from steel, stainless steel, iron, copper, polyethylene, PVC and other types of plastics, as well as the variety of diameters, tolerances, fluids and requirements of the facilities, none of the current systems can be considered suitable for each and every one of the specific uses.

The object of this invention is to develop a system that is different and improves the existing systems and which furthermore adapts better to a larger number of applications.

The operating basis of any leak-tightness system for threaded connections is to caulk the allowance existing between the threads of the male yarn and the female yarn with a filler material.

The oldest system is the use of hemp fibers together with a non-drying paste made of oils. The paste has the purpose of lubricating the thread, facilitating the tightening and preserving the hemp. Hemp is a fiber with virtually no elasticity, therefore the connection requires a very strong tightening, making the system unviable for plastic threads, since these may break upon tightening them. Nor does it allow significant modifications in the final positioning of the thread.

Though the use of hemp and the sealing paste is very widespread, it is not suitable for installations intended for carrying water for human consumption, since hemp does not meet the requirements set for materials in contact with potable water, since it promotes the growth of microorganisms.

Other fibers have been used rather than hemp, in threads with a small diameter even simple sewing yarn has been used. However the main problems with the techniques described are that the installation operation consumes a lot of time, since the paste must be applied, then the yarn and finally the paste again, in many cases requiring precise and expert labor, such as plumbers, industrial fitters, etc., being more difficult to be used by individuals in the domestic field (do-it-yourself).

Another variant to these systems is the one disclosed in the state of the art in which hemp is replaced with a synthetic polyamide fiber and the filament itself is impregnated with a non-drying, non-curable oil-based paste. Greater ease of application is thus achieved, using a device commonly used in other fields, such as dental floss, for example. This system is useful in metal threads with small diameters, but it is not the most suitable for large threads with high tolerances. In these cases, it is necessary to turn it many times with this type of filament in order to achieve the desired leak-tightness. Furthermore, it only allows a very limited modification of the final positioning or repositioning, since the caulking that is obtained is not elastic, as neither the filament nor the paste are.

Perhaps the most universal system currently in use is the sealing with strips of polytetrafluoroethylene PTFE. These strips are inert and resistant to most chemicals; they withstand moderate temperatures and are relatively cost-effective. Although their application is simple, among their disadvantages is the fact that they are not suitable for plastic threads, since they occasionally break them as the tightening force applied on the thread exceeds the resistance of the plastic material forming the thread. On the other hand, PTFE is a plastic material but it does not have elastic memory and does not recover its size, thereby not allowing the correction of the position of the parts of the threaded connection, which is a usual practice in plumbing professionals or heating installers, for example.

Another system available only for the sealing of metal threads is the use of anaerobic sealers. An absolutely secure seal is achieved with them, but they have several limitations, the main limitation being that they work only for metal connections. Another limitation is that a fine adjustment or reduced tolerance between the parts is required, which is not always standard in plumbing applications, and lastly it does not produce immediate leak-tightness, as the sealer requires a curing time.

Finally there are the sealers forming elastic joints in the interstices of the threads, which are fast-drying putties. This seal works well in any type of thread, allows achieving a desired final positioning at will and does not cause breaks in plastic threads. Its disadvantages are that it is not an easy to apply system since it requires a tedious system consisting of removing the paste or putty from its container and applying it homogenously on the yarn. The system therefore requires time. Once applied, it requires time for curing before commissioning the installation, and furthermore its cost is relatively high.

Unlike the systems existing in the state of the art, produced with non-drying pastes which, due to their own consistency, do not have elasticity properties, a joint element capable of forming an elastic seal on the yarn is herein proposed.

The elastic element of the invention is completely cured and chemically inert (since it is cross-linked silicone), it neither contaminates nor stains, it is suitable for plastic threads, does not require extreme tightening, it allows selecting the final positioning and has a good repositioning tolerance.

The system is very suitable for plastic threads, in contrast with most of the systems existing in the state of the art. For example, ES 2 171 293 (WO98/47805) also discloses a sealing yarn coated with a curable composition. However, the curable compositions used in this patent from the state of the art are of the oil with filler types, in which the oil can be selected from linseed oil, silicone oils or mineral oils, with the drawbacks already described for this type of sealing system, basically that they do not form an elastic seal. Furthermore, other coating polymers disclosed in this patent from the state of the art are different from those used in this invention. They are compositions based on one or more mono- and poly-functional reactive monomers of acrylate and methacrylate esters. These polymers are known as anaerobic sealants, they only work for sealing metal threads and are curable compositions, though they are not cured. These polymers have good mechanical resistance and are therefore particularly applied on pipe joints in industrial plants. Although the sealing system of this invention also has good mechanical resistance due to the coating of the textile support by means of the silicone rubber-based polymer, it has elasticity, thereby being applicable in more types of threads of different kinds of pipes, including the most common pipes in plumbing, and particularly in plastic pipes. This elastic feature of the sealing system of the invention provides it with a series of advantages over the known sealing systems. It is easy to apply. It can be applied on threads, in a very versatile manner, of a wide variety of industrial and domestic pipes, including plastic pipes. Complying with the same conditions of leak-tightness as the sealing systems disclosed in the state of the art, it requires less tightening of the pipes, which is important, particularly in plastic pipes, for not breaking or deforming the thread or the nut due to excessive tightening.

Said elastic nature of the sealing system of the invention allows greater repositioning of the threaded connections, a strong tightening is not necessary and it further allows successive rectifications without losing leak-tightness.

It must therefore be indicated that the proposed system is the only known system based on the use of a coating which is cured in the manufacturing process, thus giving a completely inert coated filament, unlike the existing ones which are either uncured compositions or curable compositions once applied.

The system is suitable for its use in installations intended for conducting water for human consumption, though this is not an exclusive feature thereof.

### Description of the Invention

The new system for sealing threaded connections in fluid conduction pipes by means of an elastic joint aims to constitute an actual elastic joint, unlike other systems simply acting similarly to the application of tow. It consists of two parts, which are described separately:

### 1. Joint forming element

This is an elastic element made up of a cross-linked elastic polymer applied on a textile support having certain elasticity. Polypropylene, polyethylene or polyamide-based strips, multifilaments, threads or fibers, or other natural or synthetic filaments are mentioned as preferred textiles in the invention.

The elastic polymer and the textile support do not alter the potable water features and are chemically inert to the materials carried by the pipes where they are used (water for consumption and sanitary sewage, gas, city gas, etc.). The thermal stability of the cross-linked polymer - textile support, is sufficient for being used in the applications carried out in the plumbing and heating field.

The elastic polymer is selected from at least one of the following: a silicone rubber, a polyurethane, a polyoxypropylene polymer, an acrylic polymer or any other type with elastic features, with or without added extenders (diluents), of one or more components, cross-linkable by heat, UV radiation, by moisture or by other systems. Liquid silicone rubbers are preferably chosen which, with the intervention of a catalyst, preferably platinum, and by subjecting them to high temperatures, achieve cross-linking in a few minutes, thereby allowing a continuous product manufacturing system. By way of example, they can be Dow Corning liquid silicone rubbers, Silastic (Dow Corning) or Elastosil (Wacker Silicone). These rubbers are characterized by having a high break elongation, between 150% and 700%, maintaining an also high breaking stress, exceeding 4 MPa.

Polypropylene-based polymers are chosen as the preferred multifilament yarn since this material has features of elasticity and impregnability that exceed other synthetic fibers, such as polyamide. This assembly also has elasticity in accordance with that of the coating polymer, which allows it to be compressed and to recover its dimension when repositioning occurs. Specifically, polypropylene threads with a dtex comprised between 300 and 3000, preferably between 900 and 2500.

Description of the Manufacturing Process (Application with Membrane).

With this elastic polymer to which a Pt catalyst has been added that allows a useful life of the mixture exceeding 2 hours, a textile support having a certain elasticity, such as the multifilament polypropylene yarn for example, which has the suitable resistance to temperature and to chemical agents and the use of which is suitable in fluid conduction systems, even for water intended for human consumption, is impregnated. The proportion by weight between the textile base and the elastic coating may range between a 30% and 700% coating/textile ratio.

After impregnation, which is carried out at a speed range between 2 m/minute and 10 m/minute, and before winding the elastic element onto reels with or without cores, this coating is cured. The curing for the mentioned rubbers is carried out in a high temperature tunnel at a range between 90°C and 150°C.

A preferred embodiment of the process is described below. The multifilament yarn is introduced continuously through a silicone rubber bath, completely coating its surface on its entire contour, then the excess coating is eliminated by passing the coated yarn through a device, consisting of an elastic membrane with two perpendicular cuts, and as the yarn is passed through the opening at the intersection of both perpendicular lines, a suitable dosage of the coating product is obtained. The dosage is achieved by varying the following parameters: viscosity of the liquid rubber, rate of passing the filament through the bucket and/or the strength of the membrane material. Then the silicone rubber of the coating is cross-linked or cured, as previously indicated. A machine is located at the outlet of the drying or curing tunnel which will wind the filament onto the cores for the suitable manufacture of the refills intended for sale, to be placed on the suitable application devices.

An elastic element consisting of a completely cross-linked, chemically inert polymer is thus obtained, having a textile support with certain elasticity as a base, which has neither aging nor expiry date problems since both the textile filament and the cross-linked polymer have a virtually unlimited lifetime under normal storage conditions, without needing to maintain the assembly in a closed container or system, unlike other systems made up of a fiber impregnated with a non-drying paste. Therefore, the textile support, fiber or multifilament yarn provides the sealing element with resistance, and the coating provides it with elasticity. The resistance allows the sealing element to be positioned in a stable and long-lasting manner. The elasticity allows achieving perfect leak-tightness without having to excessively tighten the screw joints, hence it is very suitable for pipes with plastic joints and for allowing the repositioning thereof.

The resulting elastic element is easy to apply in the area of the thread of the pipe and allows obtaining an elastic joint between the threads upon tightening said joint, having the basic advantages of this type of joints: it does not require extreme tightening, it allows selecting the final positioning and it has a significant tolerance to repositioning. Also, since an extreme tightening is not required, the system is suitable for plastic threads. Finally, since it is a cured and chemically inert element, it does not contaminate fluids or the pipes.

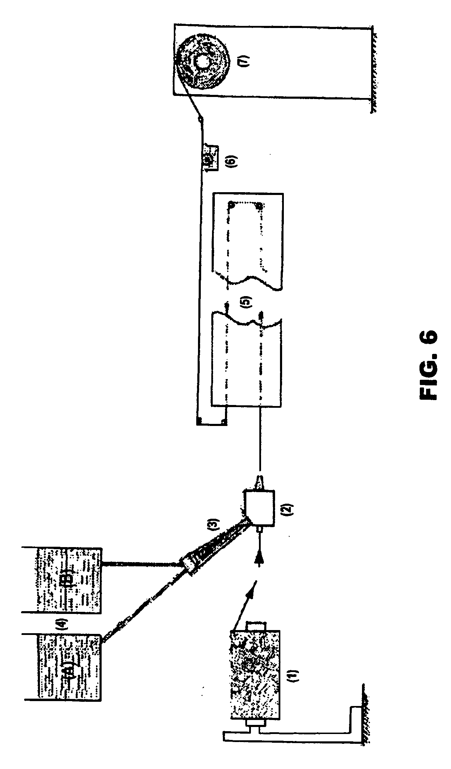

Another preferred embodiment of the invention consists of a coextrusion (2) of the silicone on the filament. The mixture of the components in a catalytic mixer (3), which makes the two components circulate throughout a spiral, can thus be carried out, the mixing is carried out as the components advance through the screw forming the spiral and with no retention enter the coextrusion injector, so there is no risk that the mixture will cross-link before being deposited under pressure on the filament. The dosage is essentially obtained by the calibration of the silicon feed nozzle and pressure, which may be of several types (A, B; Figure 6).

Another preferred embodiment of the invention (Figure 6) consists of depositing on the already cross-linked silicone a fine layer of lubricant (6). The tests have been focused on oils with a high lubricating power which neither dry nor oxidize and which are furthermore suitable for being in contact with potable water. A pure liquid paraffin oil or a synthetic oil such as food-grade Nevastene AW 22 are cited by way of example.

The product features are improved with this processing, which can be carried out continuously at the outlet of the drying tunnel (5) or at the feed area of the machines (7) for winding the reels, as indicated below:
- The yarn protects the threads from oxidation, thereby making the disassembly of the connection easier over a long period of time.
- The tightening required for threading a given amount of thread pitches is much less and the leak-tightness is obtained without needing maximum tightening.
- As a result of less tightening stress, the product is more suitable for its use in plastic threads.
- The repositionability of the thread is much greater, i.e. after having tightened the screw until obtaining leak-tightness, without having reached maximum tightening, the desired exact angle between the coupled parts can be sought by re-tightening the connection, or if maximum tightening was carried out, the system allows loosening it to the desired angle. This operation can be repeated several times. Repositionings exceeding 180° have been obtained in both directions.
- Penetration of the filament between the threads is remarkably improved.

### 2. Applicator Device

The elastic element object of the invention is wound with a crease onto a frusto-conical spindle for the purpose of facilitating the exit thereof from the applicator device.

Since these reels have a core, they can be marketed as "refills" for the reusable applicator device, unlike other single-use systems existing on the market.

The applicator device consists of an enveloping body or casing (1), having a suitable shape and size so that it fits in the user's hand. Arranged inside the enveloping body is the frustoconical reel (6) of the elastic element (4) which is extracted through an opening (3) existing in the container application part. A blade (5), located adjacent to the yarn outlet opening, is incorporated for cutting the elastic element. The part opposite to the application part can be opened by means of an opening cover (2), which allows replacing the elastic element "refill" and reusing the applicator.

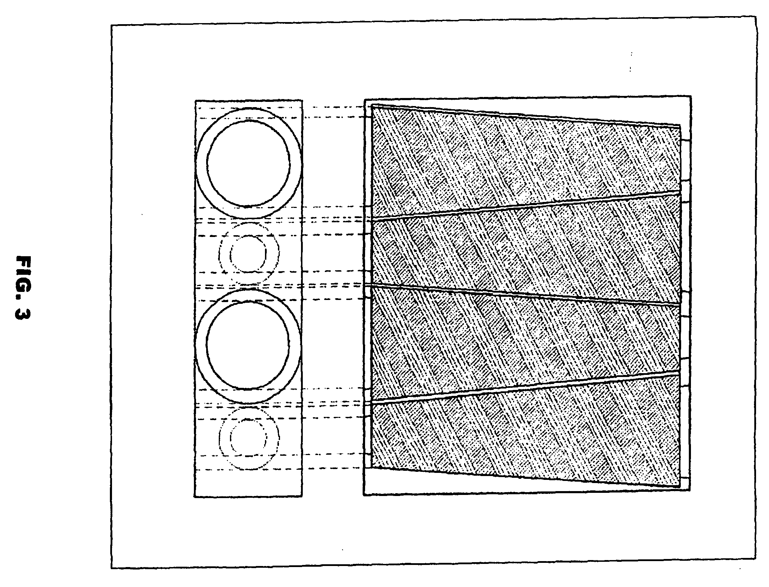

The final presentation of the product is preferably on reels with a cardboard or plastic core, which allows the sale thereof as independent elements of the dispenser, i.e. as refills, as seen in Figure 3. This marks a difference with the dental floss-type systems in which the dispenser and the product make up a whole, making the product unnecessarily more expensive.

It is not necessary for the dispenser to be hermetically sealed before its use, since the elastic element is not perishable, has no expiration date, since it is a dry yarn. Nor is it necessary for it to have a top cover for the same reason, with the added advantage that, since it does not have a top cover that must be opened every time it is used, it is easier to handle, including with one hand, a situation which frequently occurs in plumbing jobs.

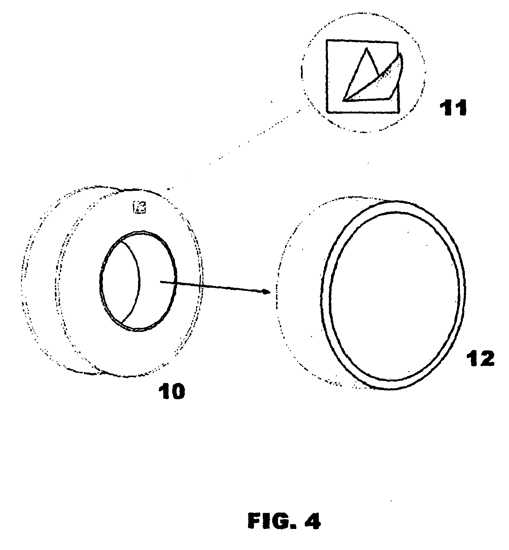

Another possible embodiment for a smaller amount of meters is the one disclosed in Figure 4, which is very similar to the features of PTFE strips which installers usually use. The reel (10) is provided with a small metal or plastic blade (11) facilitating cutting. This presentation has the advantage of being very cost-effective and it especially has a use that is very similar to the one which installers are accustomed to. The spool of sealing yarn, which can be protected with a cover (12), is wound around the reel.

Some examples illustrating the object of this invention are provided below.

The testing method used to check the efficiency of the seal of threaded connections carried out with the sealing system described in this specification is the one described in European standard UNE EN 751-2:1997 "Sealing materials for metallic threaded joints in contact with 1^{st}, 2^{nd} and 3^{rd} family gases and hot water. Part 2: Non-hardening jointing compounds". This standard specifies the testing requirements and methods for non-hardening sealing compounds that are suitable for sealing metal threaded connections. The sealing compounds object of the standard are intended for being used in contact with the 1^{st} family of gases (city gas), the 2^{nd} family of gases (natural gas) and the 3^{rd} family of gases (LPG, liquefied petroleum gases), as well as hot water for heating systems (Class A), in gas appliances and their auxiliary equipment (Class B), as well as for LPG storage (Class C).

### Example 1

Several polypropylene yarns with different dtex were coated with RTV 3133/933 silicone rubber by GLASPOL COMPOSITES, S.L., using on occasions different application techniques. The silicone was cured in the conditions indicated by the manufacturer (24 hours at room temperature).

Decitex or dtex represents the linear mass expression unit, being the weight in grams of 10,000 m of filament.

For the purpose of evaluating the performance of the impregnated yarns in threaded connection seals, half-inch iron pipe connections with couplings having the same size were carried out. The threading of the couplings were of the parallel conical type, such as those normally used by professionals in the plumbing profession. This assembly was sealed at one end and connected to a pressure pump at the other end. The assembly had a manometer for the purpose of measuring internal pressure.

The yarns coated with cross-linked silicone were applied on the male threads of the assembly, filling in the gaps of three threads. The female parts were screwed on these male threads with the usual means used by plumbing professionals. Once the assemblies were completed with the different yarns coated with cross-linked silicone, they were pressurized with air up to 6 bars. They were checked in each case for leaks (observation 1). After this test, the female thread was turned 45° in the direction opposite to the tightening direction (disassembly). They were checked in each case for leaks (observation 2). The female part was screwed again, turning 180° in the tightening direction. They were checked in each case for leaks (observation 3). The absence of leaks in the observations is indicated as OK.

The obtained results are shown in the following table:

| Yarn | dtex | Observation 1 | Observation 2 | Observation 3 | Notes |
|---|---|---|---|---|---|
| 1 | 2600 | OK | OK | OK | Does not enter thread well |
| 2 | 1750 | OK | NOT OK | OK | Enters well |
| 2 applied with membrane | 1750 | OK | OK | OK | Enters well |
| 3 | 1300 | OK | NOT OK | OK | Enters well |
| 4 | 1100 | OK | OK | OK | Enters well |
| 4 applied with membrane | 1100 | OK | OK | OK | Enters very well |

These results show the satisfactory sealing function (OK) of the described product and of the process preferred in this invention (membrane application). Not OK means that the joint had losses.

### Example 2

A Dow Corning 3605 silicone rubber coating was prepared in the part A and part B proportions indicated by the manufacturer (10:1). Part A consists of dimethyl siloxane with a dimethyl-vinyl finish (CAS 68083-19-2), treated silica (CAS 68909-20-6) and platinum as a catalyst. Part B consists of dimethyl siloxane with a dimethyl-vinyl finish (CAS 68083-19-2) and methyl siloxane (CAS 63158-57-2). Two types of polypropylene yarn with dtex 1950 and 2000 were taken. The coating was applied by means of the membrane application process explained above. The silicone curing conditions were 140°C for 5 minutes. The weight ratio between the coating and the yarns is described in the following table:

| Yarn dtex | Coating coating weight/yarn weight (%) |
|---|---|
| 1950 | 306 |
| 2000 | 606 |

### Example 3

A SILASTIC 9252/150P (Dow Corning) silicone rubber coating was prepared in the part A and part B proportions indicated by the manufacturer (10:1). Part A consists of dimethyl siloxane with a dimethyl-vinyl finish (CAS 68083-19-2), treated silica (CAS 68909-20-6) and platinum as a catalyst. Part B consists of dimethyl siloxane with a dimethyl-vinyl finish (CAS 68083-19-2) and methyl siloxane (CAS 63158-57-2). The same polypropylene yarn of dtex 1950 and 2000 used in Example 1 were taken and the coating was applied by means of the membrane application process explained above. The silicone curing conditions were 140°C for 210 seconds. The weight ratio between the coating and the yarns is described in the following table:

| Yarn dtex | Coating coating weight/yarn weight (%) |
|---|---|
| 1950 | 195 |
| 2000 | 340 |

The coated yarns in Examples 2 and 3 were tested for their mechanical properties (elongation, stress, tenacity and work). The values observed are shown in the following table:

| Property | DC 3605 1950 dtex yarn | DC 3605 2000 dtex yarn | SILASTIC 9252/150 P 1950 dtex yarn | SILASTIC 9252/150 P 2000 dtex yarn |
|---|---|---|---|---|
| Elongation (%) | 30.38 | 26.67 | 28.64 | 34.94 |
| Stress (cN) | 8517 | 12340.32 | 12392.72 | 8680.44 |
| Tenacity (cN/tex) | 46.67 | 61.70 | 61.99 | 49.62 |
| Break work (cN x cm) | 79321.72 | 99720.06 | 113587.1 | 97338.88 |

The coated yarns in Examples 2 and 3 were tested to check the efficacy of the threaded connection seal carried out with the testing method described in European standard UNE EN 751-2:1997 "Sealing materials for metallic threaded joints in contact with 1^{st}, 2^{nd} and 3^{rd} family gases and hot water. Part 2: Non-hardening jointing compounds". The results in all cases were satisfactory insofar as they complied with said European standard.
CN/tex= tenacity unit (Km of yarn required to break the yarn by the action of its own mass).
CN/cm= break working unit. It is the energy required to break the yarn and corresponds to the stress-elongation area under the curve from the origin to the breaking point.

### Description of the Drawings

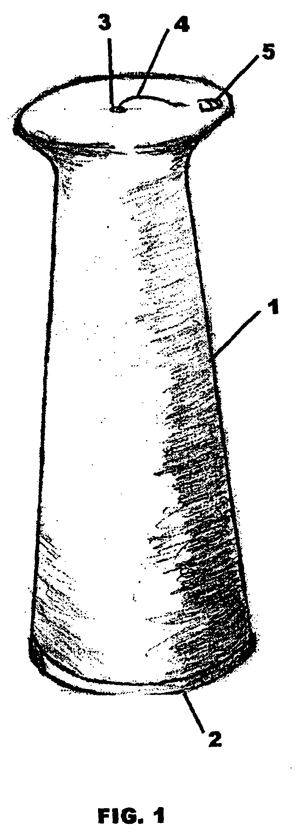

Figure 1 shows an external view of the applicator device consisting of a body (1), a cover (2) in this example located on the bottom end, an opening (3) in this case arranged on the top end where the textile filament (4) coated with the silicone rubber exits. The cutting device (5) is arranged adjacent to the yarn outlet opening.

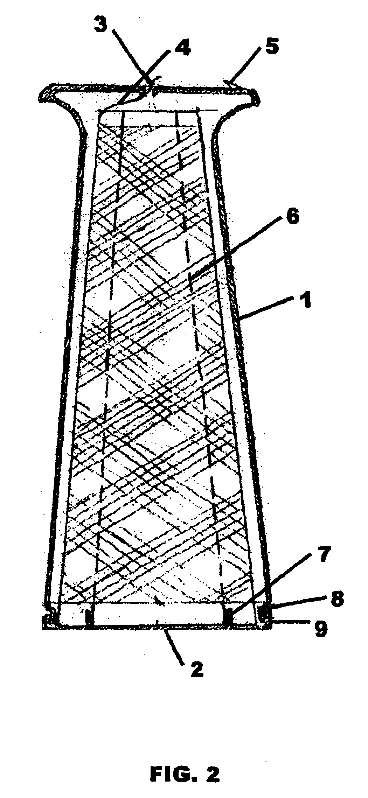

Figure 2 shows an internal view of the applicator device where the refill (6) is seen around the core of which the yarn (4) is wound. Said refill is immobilized on the bottom cover (2) by means of the stops (7), for example in the manner of a perimetral tab. The bottom cover (2) is embedded in the body of the applicator by means of recesses (8) formed therein and the corresponding projections (9) made on the ends of the cover itself.
Figure 3 shows the refill 4 containing yarn spools.
Figure 4 shows the reel applicator device.

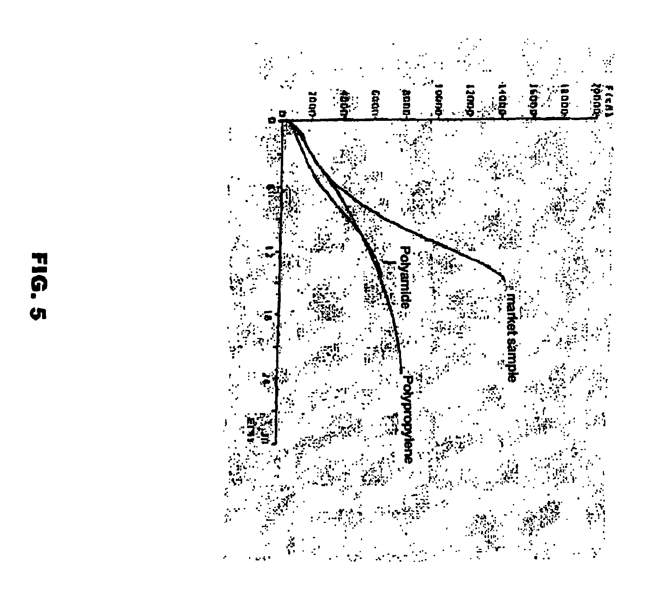

Figure 5 shows a graph of the average stress/elongation of all the spools.
   X-axis: E%= rotational elongation or elongation.
   Y-axis: F(CN): CentiNewton (equivalent to 1.02 grams-stress)
   A: Polypropylene
   B: Polyamide
   C: Control sample existing on the market (Loctite 55, Henkel Ibérica, S.A.).
Figure 6 shows a schematic representation of a preferred embodiment of the process of obtaining the elastic yarn of the invention. (1) Yarn feed supply; (2) coextensor; (3) static mixer; (4) silicone feeder (A, B); (5) dryer; (6) lubricator; (7) reel-winding machines.

## Claims

1. A sealing yarn for threaded pipe connections comprising a textile support coated with a polymer, **characterized in that** the textile support is elastic and the polymer is a silicone rubber based cross-linked elastic polymer.

2. A sealing yarn according to claim 1, **characterized in that** the silicone rubber used in the coating of the textile support has a break elongation exceeding 150% and a breaking stress exceeding 4 MPa.

3. A sealing yarn according to claims 1 and 2,
**characterized in that** the textile support is an elastic multifilament strip, yarn or fiber, preferably based on a polypropylene, polyethylene or polyamide polymer.

4. A sealing yarn according to claims 1 to 3,
**characterized in that** the ratio of the coating with respect to the textile support ranges between 30% and 700%.

5. A sealing yarn according to claims 1 to 4,
**characterized in that** the textile support is a polypropylene yarn with a dtex comprised between 500 and 3000, preferably between 900 and 2500.

6. A sealing yarn according to claims 1 to 5,
**characterized in that** the textile support, preferably in the form of multifilament yarn (4) is wound on the changeable core (6, 10) of an applicator container, said textile support projecting through an application end of the container, the yarn segments cut to the suitable length by a cutting mechanism (5, 11), also arranged on the sealing yarn application part, being applied directly on the thread of the pipe.

7. A sealing yarn according to claim 6, **characterized in that** the textile support, preferably in the form of a multifilament yarn (4), is wound on the changeable core (6) of an open applicator container, with no closure, at its application end, with at least one cover (2) on the end opposite to the application end by means of which the inside of the applicator container is accessed, said textile support projecting through the application end of the casing (1) of the container through an opening (3), the yarn segments cut to the suitable length by a cutting mechanism (5), also arranged on the application part adjacent to the sealing yarn outlet opening, being applied directly on the thread of the pipe.

8. A sealing yarn according to claim 7 comprising the sealing yarn refills wound around a core (6), which is immobilized inside the casing (1) of the applicator container.

9. A sealing yarn according to claim 8, **characterized in that** the core of the sealing yarn refill is preferably immobilized on the bottom cover (2) through stop elements (7) projecting on the inner surface of said cover.

10. A sealing yarn according to claim 6, **characterized in that** arranged on the sealing yarn wound around the core (10) there is a protective covering (12).

11. A sealing yarn according to any of the claims 1 to 10, **characterized in that** the multifilament yarn coated with silicone is impregnated with a lubricating compound.

12. A sealing yarn according to claim 11, **characterized in that** the lubricating compound is an oil.

13. A process of obtaining the sealing yarn of claims 1 to 12, wherein the elastic textile support is a multifilament yarn introduced in a silicone rubber bath, its surface being continuously coated on its entire contour; then the excess coating is eliminated by means of the passing of the coated yarn through an elastic membrane with two perpendicular cuts, such that when the thread is passed through the opening in the intersection of both perpendicular lines, a suitable dosage of the coating product is obtained according to the viscosity of the liquid rubber, the speed at which the filament is passed through the bucket and/or the strength of the membrane material; then the silicone rubber of the coating is cross-linked or cured with the intervention of a catalyst at a high temperature; once the coating is cross-linked, it is dried by means of a drying tunnel, the coated filament finally being wound on a base refill core which is introduced and fixed on the applicator device.

14. A process according to claim 13, **characterized in that** the curing catalyst used is preferably platinum.

15. A process according to claims 13 and 14, **characterized in that** the curing temperature is in the range of 90-150°C.

16. A process according to claims 13 to 15, **characterized in that** the speed at which the multifilament yarn is introduced in the silicone rubber bath ranges between 2 m/min-10 m/min.

17. A process according to claims 13 to 16, for obtaining the sealing yarn of claims 1 to 12 **characterized in that** once the multifilament yarn has been coated with the layer of silicone and said layer is dry and inert, the coated yarn is impregnated with a lubricating compound.

18. A process of obtaining the sealing yarn of claims 1 to 10, wherein the elastic textile support is a multifilament yarn which is coated with at least one silicone rubber based cross-linked elastic polymer, by means of coextrusion.

19. A process according to claim 18 for obtaining the sealing yarn of claims 1 to 12 wherein, once the coating was dry and inert, the coated yarn is impregnated with a lubricating compound.

20. A process according to any of claims 17 or 19, **characterized in that** the lubricating compound is an oil.

## Patentansprüche

1. Dichtgarn für Rohrgewindeverbindungen umfassend einen mit einem Polymer beschichteten Textilträger, **dadurch gekennzeichnet, dass** der Textilträger elastisch ist und dass das Polymer ein auf Silikonkautschuk basierendes, vernetztes elastisches Polymer ist.

2. Dichtgarn nach Anspruch 1, **dadurch gekennzeichnet, dass** der zur Beschichtung des Textilträgers verwendete Silikonkautschuk eine Reißdehnung von mehr als 150 % und eine Reißfestigkeit von mehr als 4 MPa aufweist.

3. Dichtgarn nach den Ansprüchen 1 und 2, **dadurch gekennzeichnet, dass** der Textilträger ein elastischer Multifilamentstreifen, ein elastisches Multifilamentgarn oder eine elastische Multifilamentfaser ist, vorzugsweise basierend auf einem Polypropylen-, einem Polyethylen- oder einem Polyamidpolymer.

4. Dichtgarn nach den Ansprüchen 1 bis 3, **dadurch gekennzeichnet, dass** das Verhältnis der Beschichtung bezogen auf den Textilträger im Bereich von 30 % bis 700 % liegt.

5. Dichtgarn nach den Ansprüchen 1 bis 4, **dadurch gekennzeichnet, dass** der Textilträger ein Polypropylengarn mit einem dtex-Wert im Bereich zwischen 500 und 3000, vorzugsweise zwischen 900 und 2500, ist.

6. Dichtgarn nach den Ansprüchen 1 bis 5, **dadurch gekennzeichnet, dass** der Textilträger, vorzugsweise in Form eines Multifilamentgarns (4), auf dem austauschbaren Kern (6, 10) eines Applikationsbehälters aufgewickelt ist, wobei der Textilträger aus einem Applikationsende des Behälters herausragt, wobei die mit einem Schneidemechanismus (5, 11), der ebenfalls auf dem Dichtgarnapplikationselement angeordnet ist, auf geeignete Länge geschnittenen Garnsegmente direkt auf das Rohrgewinde aufgebracht werden.

7. Dichtgarn nach Anspruch 6, **dadurch gekennzeichnet, dass** der Textilträger, vorzugsweise in Form eines Multifilamentgarns (4), auf dem austauschbaren Kern (6) eines offenen Applikationsbehälters aufgewickelt ist, der keinen Verschluss an seinem Applikationsende aufweist, mit zumindest einer Abdeckung (2) an dem Ende, das dem Applikationsende gegenüberliegt, wodurch die Innenseite des Applikationsbehälters zugänglich wird, wobei der Textilträger aus dem Applikationsende des Gehäuses (1) durch eine Öffnung (3) herausragt, wobei die mit einem Schneidemechanismus (5), der ebenfalls auf dem Applikationselement angrenzend an die Auslassöffnung für das Dichtgarn angeordnet ist, auf geeignete Länge geschnittenen Garnsegmente direkt auf das Rohrgewinde aufgebracht werden.

8. Dichtgarn nach Anspruch 7, umfassend die auf einem innerhalb des Gehäuses (1) des Applikationsbehälters immobilisierten Kern (6) aufgewickelten Dichtgarnnachfüllungen.

9. Dichtgarn nach Anspruch 8, **dadurch gekennzeichnet, dass** der Kern der Dichtgarnnachfüllung vorzugsweise an der Bodenabdeckung (2) durch Stoppelemente (7), die an der Innenseite dieser Abdeckung herausragen, immobilisiert ist.

10. Dichtgarn nach Anspruch 6, **dadurch gekennzeichnet, dass** auf dem auf dem Kern (10) aufgewickelten Dichtgarn eine Schutzhülle (12) angeordnet ist.

11. Dichtgarn nach einem der Ansprüche 1 bis 10, **dadurch gekennzeichnet, dass** das mit Silikon beschichtete Multifilamentgarn mit einer Schmiermittelverbindung imprägniert ist.

12. Dichtgarn nach Anspruch 11, **dadurch gekennzeichnet, dass** die Schmiermittelverbindung ein Öl ist.

13. Verfahren zum Erhalt des Dichtgarns nach den Ansprüchen 1 bis 12, bei dem der elastische Textilträger ein Multifilamentgarn ist, das in ein Silikonkautschukbad eingebracht wird, wodurch seine Oberfläche kontinuierlich entlang der gesamten Umrisslinie beschichtet wird; anschließend die überschüssige Beschichtung eliminiert wird, indem das beschichtete Garn durch eine elastische Membran mit zwei rechtwinklig aufeinander stehenden Einschnitten geführt wird, so dass dann, wenn der Faden durch die Öffnung an der Kreuzung der beiden rechtwinklig aufeinander stehenden Linien geführt wird, gemäß der Viskosität des flüssigen Kautschuks, der Geschwindigkeit, mit der das Filament durch den Eimer geführt wird, und/oder der Stärke des Membranmaterials eine geeignete Dosierung des Beschichtungsprodukts erhalten wird; anschließend der Silikonkautschuk der Beschichtung vermittels eines Katalysators bei einer hohen Temperatur vernetzt oder gehärtet wird; sobald die Beschichtung vernetzt ist, diese mittels eines Trockenkanals getrocknet wird, und das beschichtete Filament abschließend auf einen Nachfüllträgerkern aufgewickelt wird, der in die Applikationsvorrichtung eingebracht und dort fixiert wird.

14. Verfahren nach Anspruch 13, **dadurch gekennzeichnet, dass** der verwendete Härtungskatalysator vorzugsweise Platin ist.

15. Verfahren nach den Ansprüchen 13 und 14, **dadurch gekennzeichnet, dass** die Härtungstemperatur im Bereich von 90 bis 150 °C liegt.

16. Verfahren nach den Ansprüchen 13 bis 15, **dadurch gekennzeichnet, dass** die Geschwindigkeit, mit der das Multifilamentgarn in das Silikonkautschukbad eingebracht wird, im Bereich von 2 m/min bis 10 m/min liegt.

17. Verfahren nach den Ansprüchen 13 bis 16 zum Erhalt des Dichtgarns nach den Ansprüchen 1 bis 12, **dadurch gekennzeichnet, dass**, sobald das Multifilamentgarn mit einer Silikonschicht beschichtet wurde und diese Schicht trocken und inert ist, das beschichtete Garn mit einer Schmiermittelverbindung imprägniert wird.

18. Verfahren zum Erhalt des Dichtgarns nach den Ansprüchen 1 bis 10, bei dem der elastische Textilträger ein Multifilamentgarn ist, das mittels Extrusion mit zumindest einem auf Silikonkautschuk basierenden, vernetzten elastischen Polymer beschichtet ist.

19. Verfahren nach Anspruch 18 zum Erhalt des Dichtgarns nach den Ansprüchen 1 bis 12, bei dem, sobald die Beschichtung trocken und inert ist, das beschichtete Garn mit einer Schmiermittelverbindung imprägniert wird.

20. Verfahren nach einem der Ansprüche 17 oder 19, **dadurch gekennzeichnet, dass** die Schmiermittelverbindung ein Öl ist.

## Revendications

1. Fil d'étanchéité pour raccords filetés de tuyauterie, comportant un support textile revêtu d'un polymère, **caractérisé en ce que** le support textile est élastique et le polymère est un polymère élastique réticulé à base de caoutchouc de silicone.

2. Fil d'étanchéité conforme à la revendication 1, **caractérisé en ce que** le caoutchouc de silicone utilisé dans le revêtement du support textile présente un allongement à la rupture qui dépasse 150 % et une contrainte de rupture qui dépasse 4 MPa.

3. Fil d'étanchéité conforme à la revendication 1 ou 2, **caractérisé en ce que** le support textile est une bande, un fil ou une fibre élastique, à filaments multiples, de préférence à base d'un polymère de type polypropylène, polyéthylène ou polyamide.

4. Fil d'étanchéité conforme à l'une des revendications 1 à 3, **caractérisé en ce que** la proportion du revêtement au support textile vaut de 30 % à 700 %.

5. Fil d'étanchéité conforme à l'une des revendications 1 à 4, **caractérisé en ce que** le support textile est un fil de polypropylène dont le titre vaut de 500 à 3000 dtex, et de préférence, de 900 à 2500 dtex.

6. Fil d'étanchéité conforme à l'une des revendications 1 à 5, **caractérisé en ce que** le support textile, se présentant de préférence sous la forme d'un fil à filaments multiples (4), est enroulé sur le noyau échangeable (6, 10) d'un réservoir applicateur et sort de ce réservoir par le côté application de celui-ci, des segments de fil, coupés à bonne longueur au moyen d'un dispositif de coupe (5, 11) également disposé dans la partie servant à appliquer le fil d'étanchéité, étant directement appliqués sur le filetage d'un tuyau.

7. Fil d'étanchéité conforme à la revendication 6, **caractérisé en ce que** le support textile, se présentant de préférence sous la forme d'un fil à filaments multiples (4), est enroulé sur le noyau échangeable (6) d'un réservoir applicateur ouvert, sans élément de fermeture, de son côté application, au moins un couvercle (2) se trouvant sur le côté opposé au côté application qui donne accès à l'intérieur du réservoir applicateur, ledit support textile sortant du côté application du boîtier (1) du réservoir par une ouverture (3), et des segments de fil, coupés à bonne longueur au moyen d'un dispositif de coupe (5) également disposé dans la partie applicatrice adjacente à l'ouverture par laquelle sort le fil d'étanchéité, étant directement appliqués sur le filetage d'un tuyau.

8. Fil d'étanchéité conforme à la revendication 7, comportant une recharge de fil d'étanchéité enroulé autour d'un noyau (6), laquelle recharge est immobilisée à l'intérieur du boîtier (1) du réservoir applicateur.

9. Fil d'étanchéité conforme à la revendication 8, **caractérisé en ce que** le noyau de la recharge de fil d'étanchéité est de préférence fixé sur le couvercle de fond (2) par des éléments d'arrêt (7) qui font saillie sur la surface interne dudit couvercle.

10. Fil d'étanchéité conforme à la revendication 6, **caractérisé en ce qu'**il y a une enveloppe de protection (12), qui est disposée par-dessus le fil d'étanchéité enroulé autour du noyau (10).

11. Fil d'étanchéité conforme à l'une des revendications 1 à 10, **caractérisé en ce que** le fil à filaments mulltiples revêtu de silicone est imprégné d'un composé lubrifiant.

12. Fil d'étanchéité conforme à la revendication 11, **caractérisé en ce que** le composé lubrifiant est une huile.

13. Procédé d'obtention d'un fil d'étanchéité conforme à l'une des revendications 1 à 12, dans lequel le support textile élastique est un fil à filaments multiples qu'on fait passer dans un bain de caoutchouc de silicone, de sorte que sa surface est revêtue en continu sur tout son pourtour, puis on élimine l'excès de revêtement en faisant passer le fil revêtu à travers une membrane élastique où l'on a pratiqué deux entailles perpendiculaires, de telle sorte que, en faisant passer le fil dans l'ouverture située à l'intersection de ces deux entailles perpendiculaires, on parvient à doser convenablement le produit de revêtement en fonction de la viscosité du caoutchouc liquide, de la vitesse à laquelle on fait passer le fil dans la cuve et/ou de la résistance mécanique du matériau de la membrane, puis on fait réticuler ou durcir le caoutchouc de silicone du revêtement, sous l'action d'un catalyseur et à température élevée, et une fois le revêtement réticulé, on le fait sécher dans un tunnel de séchage, et l'on enroule enfin le fil revêtu sur un noyau de recharge de base, qu'ensuite on introduit dans un dispositif applicateur où on le fixe.

14. Procédé conforme à la revendication 13, **caractérisé en ce que** le catalyseur employé pour le durcissement est de préférence du platine.

15. Procédé conforme à la revendication 13 ou 14, **caractérisé en ce que** la température à laquelle on effectue le durcissement se situe dans la gamme allant de 90 à 150 °C.

16. Procédé conforme à l'une des revendications 13 à 15, **caractérisé en ce que** la vitesse à laquelle on fait passer le fil à filaments multiples dans le bain de caoutchouc de silicone vaut de 2 à 10 m/min.

17. Procédé conforme à l'une des revendications 13 à 16, permettant d'obtenir un fil d'étanchéité conforme à l'une des revendications 1 à 12, **caractérisé en ce que**, une fois le fil à filaments multiples revêtu d'une couche de silicone et une fois cette couche sèche et inerte, on imprègne d'un composé lubrifiant le fil revêtu.

18. Procédé permettant d'obtenir un fil d'étanchéité conforme à l'une des revendications 1 à 10, dans lequel le support textile élastique est un fil à filaments multiples qui est revêtu, par coextrusion, d'au moins un polymère élastique réticulé à base de caoutchouc de silicone.

19. Procédé conforme la revendication 18, permettant d'obtenir un fil d'étanchéité conforme à l'une des revendications 1 à 12, dans lequel, une fois le revêtement sec et inerte, on imprègne d'un composé lubrifiant le fil revêtu.

20. Procédé conforme à la revendication 17 ou 19, **caractérisé en ce que** le composé lubrifiant est une huile.
